# EUROPEAN PATENT SPECIFICATION

(11) **EP 2 949 058 B1**
(45) Date of publication and mention of the grant of the patent: **17.08.2016**
(21) Application number: 15704156.7
(22) Date of filing: 27.01.2015
(51) Int. Cl.: H04B 10/50, G02B 6/42, H04B 10/40

(54) **OPTICAL DATA TRANSFER UTILIZING LENS ISOLATION**
OPTISCHE DATENÜBERTRAGUNG MIT LINSENISOLIERUNG
TRANSFERT DE DONNÉES OPTIQUES UTILISANT L'ISOLATION DE LENTILLE

(30) Priority: 19.03.2014 US 201414219559
(43) Date of publication of application: 02.12.2015
(73) Proprietor: Apple Inc., Cupertino, CA 95014 (US)
(72) Inventor: HILARO, Alvin J., Cupertino CA 95014 (US); HUEY, Jason J., Cupertino CA 95014 (US); KEELER, Kevin M., Cupertino CA 95014 (US); ALVES, Jeffrey M., Cupertino CA 95014 (US); TERLIZZI, Jeffrey J., Cupertino CA 95014 (US)
(74) Representative: Rooney, John-Paul
(86) International application number: PCT/US2015/013096
(87) International publication number: WO 2015/142423

(56) References cited:
- US-A1- 2002 154 879
- US-A1- 2005 213 983
- US-A1- 2008 253 766
- US-A1- 2010 021 176

## Description

### Technical Field

This disclosure relates generally to communications, and more specifically to optical data transfer utilizing lens isolation.

### Background

Electronic devices frequently transfer data to and/or from other electronic devices. For example, a mobile computing device such as a tablet or smartphone may communicate with a desktop computer, laptop computer, docking station, and/or other electronic device for the purposes of synching data on the mobile computing device and/or data on the other electronic device. In order to enable such communication, electronic devices often include one or more connection mechanisms that may be utilized for such communication.

For example, electronic devices may include one or more contacts that may contact one or more contacts of another electronic device. Such contacts may be made of metal. The connection between the contacts may be utilized to transmit and/or receive data between the electronic devices.

However, such a configuration typically necessitates the metal contacts being exposed to the external environment. Such exposure (such as to moisture in the external environment) may cause the contacts to erode over time. Such corrosion may adversely impact the aesthetics of the electronic devices. Further, such corrosion may also alter the resistance of the contacts, impairing the functionality of the contacts.

This problem may be exacerbated when the electronic devices are wearable devices, such as electronic watches or glasses, and/or when the electronic devices come into frequent contact with skin or other body components. Exposure to skin or other body components may cause the electronic devices to be exposed to sebum, perspiration, oleic acid, other body chemicals, and/or other chemicals used by users in daily life. Such exposure may be even more corrosive to contacts that moisture and/or other conditions of the external environment.

US 2005/02139883 A1 discloses a stack-integrated package of anoptical tranceiver for single core full duplex fiber communications.

### Summary

The present disclosure discloses systems and methods for optical data transfer utilizing lens isolation. A first electronic device may optically communicate with a second electronic device. Each of the devices may include one or more optical transmitters, one or more optical receivers, and one or more lenses where each of the lenses may include at least a first and a second optical path that are optically isolated from each other. When the first electronic device transmits data to the second electronic device, an optical transmitter of the first electronic device may transmit to an optical receiver of the second electronic device via the first optical paths of the lenses of the first and second electronic devices. Similarly, when the first electronic device receives data from the second electronic device, an optical receiver of the first electronic device may receive from an optical transmitter of the second electronic device via the second optical paths of the lenses of the first and second electronic devices. As transmission and receipt are isolated, they may be performed simultaneously and this increase data throughput over systems that either receive or transmit at a single time.

The first and second paths of either of the lenses may be optically isolated in a variety of ways. In some cases, various portions of one of the lenses may comprise separate windows and the first and second paths may correspond to different portions, and thus different separate windows. For example, the different portions may be constructed from different materials, such as one portion constructed from zirconium and/or opaque zirconium and another portion constructed from sapphire and/or sapphire glass. Such different portions may be coupled in a variety of ways, such as utilizing glue and/or other adhesive. By way of another example, the different portions may be separated by one or more separator elements. Such separator elements may hinder the ability of light to propagate from one portion to another and may include a brazing ring, silicon, metal, adhesive, and/or other such materials.

In other cases, the first and second optical paths may be isolated by lens geometry and/or by configuration of the optical transmitters and/or receivers. For example, the lens may be shaped such that the first and second optical paths are optically isolated and do not interfere with each other. By way of another example, an optical transmitter and an optical receiver of one of the electronic devices may each be pointed at the lens of that device at opposing forty-five degree angles. Due to such opposite angling, light traveling between each set of transmitter and receiver may not propagate through the lens to interfere with light traveling between the other set.

In various implementations, a system for optical data transfer may include a first electronic device with at least one first device optical transmitter, at least one first device optical receiver, and at least one first device lens including at least a first optical path and a second optical path where the first optical path is optically isolated from the second optical data path; and a second electronic device with at least one second device lens. The at least one first device optical transmitter may transmit utilizing at least the first optical path and the at least one first device optical receiver may receive utilizing at least the second optical path.

In some implementations, an electronic device includes at least one optical transmitter; at least one optical receiver; and at least one lens including at least a first optical path and a second optical path where the first optical path is optically isolated from the second optical data path. The at least one optical transmitter may transmit to an additional electronic device utilizing at least the first optical path and the at least one optical receiver may receive from the additional electronic device utilizing at least the second optical path.

In one or more implementations, a method for optical data transfer using lens isolation includes constructing at least one lens with a first optical path and a second optical path wherein the first optical path is optically isolated from the second optical path; coupling the at least one lens to a first electronic device; and configuring the first electronic device to at least one of: utilize at least one optical transmitter to transmit to a second electronic device via the first optical path; or utilize at least one optical receiver to receive from the second electronic device via the second optical path.

It is to be understood that both the foregoing general description and the following detailed description are for purposes of example and explanation and do not necessarily limit the present disclosure. The accompanying drawings, which are incorporated in and constitute a part of the specification, illustrate subject matter of the disclosure. Together, the descriptions and the drawings serve to explain the principles of the disclosure.

### Brief Description of the Drawings

FIG. 1 A is a block diagram illustrating an example system for optical data transmission utilizing lens isolation.
FIG. 1 B illustrates the system of FIG. 1 A when the first electronic device receives from the second electronic device.
FIG. 1C illustrates the system of FIG. 1 A when the first electronic device transmits to the second electronic device.
FIG. 2 is a block diagram illustrating an alternative example system for optical data transmission utilizing lens isolation.
FIG. 3 is a flow chart illustrating a method for optical data transmission utilizing lens isolation. This method may be performed by the systems of FIGS. 1A-1C or 2.

### Detailed Description

The description that follows includes sample systems, methods, and computer program products that embody various elements of the present disclosure. However, it should be understood that the described disclosure may be practiced in a variety of forms in addition to those described herein.

The present disclosure discloses systems and methods for optical data transfer utilizing lens isolation. A first electronic device may optically communicate with a second electronic device. Each of the devices may include one or more optical transmitters, one or more optical receivers, and one or more lenses. Each of the lenses may include at least a first and a second optical path that are optically isolated from each other. When the first electronic device transmits data to the second electronic device, an optical transmitter of the first electronic device may transmit to an optical receiver of the second electronic device via the first optical paths of the lenses of the first and second electronic devices. Similarly, when the first electronic device receives data from the second electronic device, an optical receiver of the first electronic device may receive from an optical transmitter of the second electronic device via the second optical paths of the lenses of the first and second electronic devices. As the communication is performed optically through lenses that may be resistant and/or immune to corrosion, the devices may suffer fewer problems caused by exposure to the environment, body chemicals, and/or other such substances. As transmission and receipt are isolated, they may be performed simultaneously and this increase data throughput over systems that either receive or transmit at a single time.

In various cases, the optical transmitter of the first and/or second electronic device may be at least one light source. Such a light source may be any kind of light source such as a light emitting diode (LED), and organic light emitting diode (OLED), a laser a light transmitter, an incandescent light source, an infrared transmitter, and/or other such device capable of producing light. Similarly, the optical receiver of the first and/or second electronic device may be a light detector. Such a light detector be any kind of light detector such as a photo diode, a light receiver, an infrared detector, and/or other such device capable of detecting light.

The first and second paths of either of the lenses may be optically isolated in a variety of ways. In some cases, various portions of one of the lenses may comprise separate windows and the first and second paths may correspond to different portions, and thus different separate windows.

For example, the different portions may be constructed from different materials (such as one portion constructed from zirconium and/or opaque zirconium and another portion constructed from sapphire and/or sapphire glass). Such different portions may be coupled in a variety of ways, such as utilizing glue and/or other adhesive.

By way of another example, the different portions may be separated by one or more separator elements. Such separator elements may hinder the ability of light to propagate from one portion to another and may include a brazing ring, silicon, metal, adhesive, and/or other such materials.

In other cases, the first and second optical paths may be isolated by lens geometry and/or by configuration of the optical transmitters and/or receivers. For example, the lens may be shaped (such as including multiple separate regions of concavity or convexity) such that the first and second optical paths are optically isolated and do not interfere with each other.

By way of another example, an optical transmitter and an optical receiver of one of the electronic devices may each be pointed at the lens of that device at opposing forty-five degree angles (and the corresponding optical receiver and optical transmitter may be angled accordingly) such that the light from the transmitter travels at an angle through the lens to the lens and receiver of the other device and the light received from the lens of the other device travels at an opposing angle through the lens to be received by the receiver. Due to such opposite angling, light traveling between each set of transmitter and receiver may not propagate through the lens to interfere with light traveling between the other set.

In various cases, the lenses may operate to aid in transmission of light between optical transmitters and optical receivers. For example, a lens may collect light transmitted by an optical transmitter and focus the collected light upon an optical receiver. In this way, more of the light transmitted by the optical transmitter may be received by the optical receiver. This may enable consumption of less power for data transmission, utilization of less time for data transmission, and/or other such benefits.

In various implementations, data transmission accomplished using one or more optical transmitters and/or optical receivers may transmit any kind of data. Such data may include, but is not limited to authentication data, one or more software and/or firmware updates, one or more serial numbers, one or more model numbers, and so on. The transmission frequency and/or amplitude of the light, as examples, may be encoded with data for transmission.

For example, in some cases the first electronic device may be a dock for the second electronic device. In such cases, one or more optical transmitters and/or optical receivers of the first and second electronic devices may be utilized to transmit and/or receive authentication data, one or more software and/or firmware updates, one or more serial numbers, one or more model numbers, and/or other such data from the dock to the second electronic device and/or from the second electronic device to the dock.

In some implementations, one or more optical transmitters and/or optical receivers may also be utilized for purposes other than data transmission. For example, an optical transmitter may also be utilized to provide one or more indicator lights to a user when not being used to transmit data between electronic devices. By way of another example, an optical receiver may be utilized as an ambient light detector to determine an ambient light level of an environment in which an electronic device is operating when not being used to receive data between electronic devices.

By way of still another example, one or more optical transmitters and/or optical receivers may be utilized to determine whether or not a first electronic device is docked and/or otherwise aligned with a second electronic device. In such an example, one or more optical transmitters of such a first electronic device may periodically, continually, or otherwise transmit (such as in response to a signal from one or more alignment elements). Similarly, one or more receivers of the other device may periodically, continually, or otherwise (such as in response to a signal from one or more alignment elements) monitor for such a transmission. Upon receipt of such a transmission, the second may determine that the devices are docked and/or otherwise aligned. At such time, the second device may utilize transmit a signal to the first device indicating acknowledgment that the devices are docked and/or otherwise aligned. Transmission may be initiated in a variety of manners, such as in response to a signal from one or more alignment elements of the device or devices such as one or more magnets, switches, detents, buttons, or other elements that detects that the devices are docked and/or otherwise aligned. These indications of alignment may trigger an instruction to begin transmission, for example. It should be appreciated that these are but a handful of examples of suitable structures that may be used to initiate a transmission.

By way of yet another example, one or more optical transmitters and/or optical receivers may be utilized to wake up and/or otherwise alter the power or other state of one or more components of a first electronic device and/or a second electronic device. For example, such a component may be a power transmission and/or charging system component. In such an example, one or more optical transmitters of such a first or electronic device may periodically, continually, or otherwise transmit (such as in response to a signal from one or more alignment elements) and one or more receivers of the other device may periodically, continually, or otherwise (such as in response to a signal from one or more alignment elements) monitor for such a transmission. Upon receipt of such a transmission, the device including the receiver may wake up and/or otherwise alter the power state of a power transmission and/or charging system component of the first and/or second electronic device in order for power transmission and/or charging to be performed between the first and second electronic devices. Similar structures and/or conditions as those discussed above with respect to docking may be used initiate transmission, as may any other suitable structures and/or conditions.

By way of still another example, one or more optical transmitters and/or optical receivers may be utilized in one or more power control systems involving the first electronic device and the second electronic device. In some cases, the first electronic device may be a dock or other device that is capable of transmitting power (such as via induction) to the second electronic device. In various examples of such cases, one or more optical transmitters and/or optical receivers of the dock and/or second electronic device may be utilized for controlling and/or otherwise negotiating the status of such power transmission.

In a first example of such a case, one or more optical transmitters and/or optical receivers of the dock and/or second electronic device may be utilized to transmit and/or receive error control packets and/or other information. Such error control packets and/or other information may be utilized to transmit and/or receive a power state of the second electronic device, a battery charge level of the second electronic device, characteristics of power being transmitted and/or received, and/or other such error control. In response to such error control packets or information, one or more characteristics of the power transmission may be adjusted such as increasing and/or decreasing voltage, wattage, duty cycle, amplitude, frequency, and/or any other power characteristic.

In a second example of such a case, one or more optical transmitters and/or optical receivers of the dock and/or second electronic device may be utilized to transmit and/or receive one or more interrupts for such power transmission. For example, interrupts may be transmitted and/or received when the second electronic device is no longer prepared to receive transmitted power (such as where the second electronic device determines to stop receiving power based on thermal considerations), becomes ready to receive power (such as after the second electronic device determined to stop receiving power based on thermal considerations and such thermal considerations have abated), and/or other such interrupts.

In various implementations where the first electronic device is a dock for the second electronic device, one or more optical transmitters and/or optical receivers of the dock and/or second electronic device may be utilized to detect whether or not the second electronic device is currently docked.

For example, such a dock may be connected to a power source such as a wall outlet and may be operable to transit power to charge one or more batteries and/or otherwise power the second electronic device. In such a case, if it is determined utilizing the one or more optical transmitters and/or optical receivers that the second electronic device is docked, the dock may transmit power accordingly. However, if it is determined utilizing the one or more optical transmitters and/or optical receivers that the second electronic device is not docked, the dock may not transmit power. As such, the dock may not utilize power for power transmission when the second device is not docked.

Although the present disclosure is illustrated and described as utilizing one or more lenses and/or optical transmitters and/or optical receivers of the first and/or second electronic devices that are visibly exposed, it is understood that this is an example. Other configurations are possible and contemplated without departing from the scope of the present disclosure.

For example, in various implementations one or more portions of a housing (such as a lid) and/or other elements of the first and/or second electronic devices may be sufficiently thin that at least some light or other optical signal is able to pass. For instance, a portion of a lid may be configured to be thinner than other portions of the lid such that at least some light is able to pass into and/or out of the thinned portion. In this way, transmission may be accomplished without visibly exposed light sources, optical transmitters, optical receivers, and/or lenses and a 'clean' look of the first and/or second electronic devices may be accomplished.

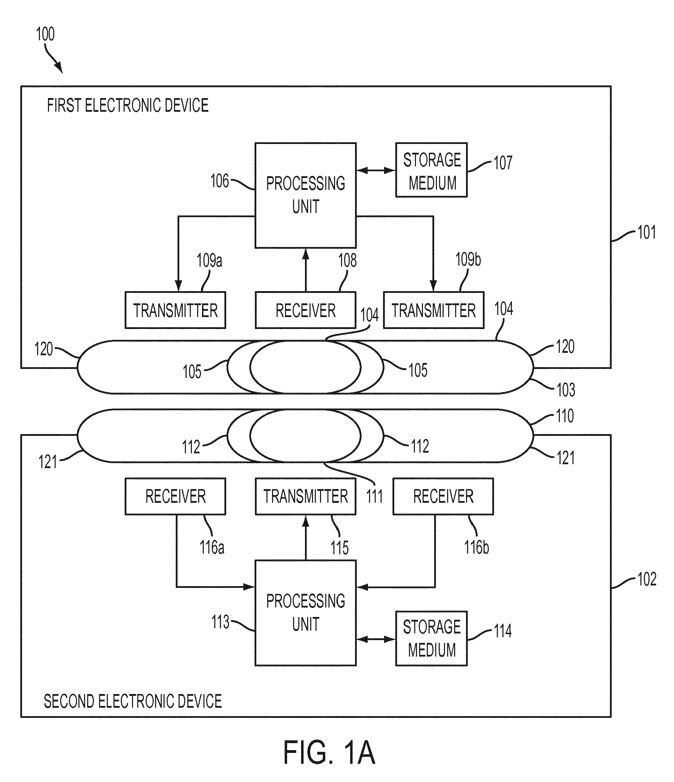

FIG. 1 A is a block diagram illustrating an example system 100 for optical data transfer utilizing lens isolation. The system 100 may include a first electronic device 101 and a second electronic device 102. Although the system is illustrated with two electronic devices, it is understood that this is an example. In various cases, any number of different electronic devices may be utilized.

The first and/or second electronic devices may be any kind of electronic devices. Such electronic devices may be desktop computers, laptop computers, mobile computers, wearable devices such as electronic watches and/or glasses, tablet computers, digital media players, set top boxes, cellular telephones, smart phones, kitchen appliances, automobiles, and/or any other such electronic device.

The first electronic device 101 may include one or more processing units 106, one or more non-transitory storage media 107 (which may take the form of, but is not limited to, a magnetic storage medium; optical storage medium; magneto-optical storage medium; read only memory; random access memory; erasable programmable memory; flash memory; and so on), one or more optical receivers 108, one or more optical transmitters 109a and 109b, and one or more lenses 103. The processing unit 106 may execute instructions stored in the non-transitory storage medium 107 to perform a variety of first electronic device functions, such as optical data communication with the second electronic device 102.

Similarly, the second electronic device 102 may include one or more processing units 113, one or more non-transitory storage media 114, one or more optical receivers 116a and 116b, one or more optical transmitters 115, and one or more lenses 110. The processing unit 113 may execute instructions stored in the non-transitory storage medium 114 to perform a variety of first electronic device functions, such as optical data communication with the first electronic device 101.

Although the first electronic device 101 is shown and described above with one optical receiver 108 and two optical transmitters 109a and 109b and the second electronic device 102 is shown and described above with one optical transmitter 115 and two optical receivers 116a and 116b, it is understood that this is an example. In various implementations, the first and second electronic devices may include any number of corresponding optical transmitters and receivers without departing from the scope of the present disclosure.

As illustrated, the lens 103 may include a middle portion 104 and outer portions 120 separated by separator elements 105. As such, the middle portion may correspond to a first optical path and the outer portions may correspond to a second optical path. The middle portion may be constructed from a different material than the outer portions. For example, the middle portion may be zirconium and/or opaque zirconium and the outer portions may be sapphire and/or sapphire glass. Additionally, the separator element may be constructed from a variety of different materials such as a brazing ring, silicon, metal, and/or adhesive. The separator element may couple the middle portion to the outer portions, such as where adhesive is used to join the middle portion to the outer portion or where a brazing ring is used to braze the middle portion to the outer portion.

Although the lens 103 is illustrated as having a separator element 105 and the middle portion 104 is described as being formed of a different material than the outer portions 120 and being separated from the outer portions by a separator element 105, it is understood that this is an example. In various implementations, the middle portion may be constructed of a different material than the outer portion but may not be separated from such by a separator element. Further, in some implementations, the middle portion may be constructed of the same material as the outer portions but may be separated from the outer portions by the separator element.

The different materials of the middle portion 104 and the outer portions 120 and/or the separation of the middle portion from the outer portions by the separator element 105 may prevent light from the first optical path from interfering with the second optical path or at least partially mitigate such interference and vice versa. Absent such different materials, separator elements, or other mechanisms for optically isolating the first optical path from the second optical path, light in either path passing through the lens may not only pass through the lens in a straight line. Instead, a portion of the light may propagate through the lens other than in the original direction of travel, thus causing light from one optical path to interfere with one or more other optical paths. This may hinder transmission of data, or at least make the transmission of data more difficult. By optically isolating the optical paths, transmission of data may be improved and/or made less error prone.

Similarly, as illustrated, the lens 110 may include a middle portion 111 and outer portions 121 separated by separator elements 111. As such, the middle portion may correspond to a first optical path and the outer portions may correspond to a second optical path. The middle portion may be constructed from a different material than the outer portions. For example, the middle portion may be zirconium and/or opaque zirconium and the outer portions may be sapphire and/or sapphire glass. Additionally, the separator element may be constructed from a variety of different materials such as a brazing ring, silicon, metal, and/or adhesive. The separator element may couple the middle portion to the outer portions, such as where adhesive is used to join the middle portion to the outer portion or where a brazing ring is used to braze the middle portion to the outer portion.

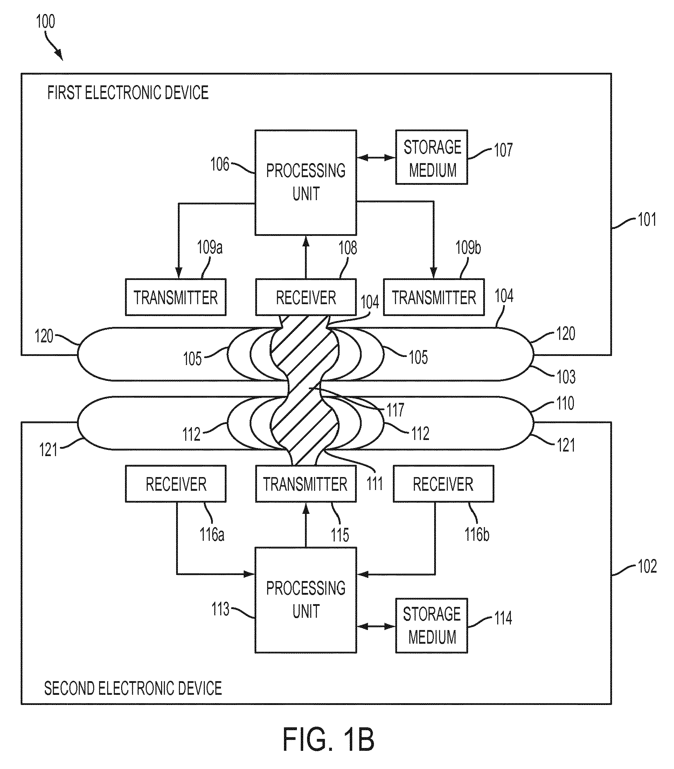

FIG. 1 B illustrates the system 100 of FIG. 1 A when the first electronic device 101 receives from the second electronic device 102. The second electronic device may encode data and transmit such as light 117 via the optical transmitter 115. The middle portion 111 of the lens 110 may collect the light 117 transmitted by the optical transmitter 115 and pass the light 117 to the middle portion 104 of the lens 103. The middle portion 104 of the lens 103 may receive the passed light 117 and focus it onto the optical receiver 108. The first electronic device may then decode the transmitted information from the light 117 received by the optical receiver 108.

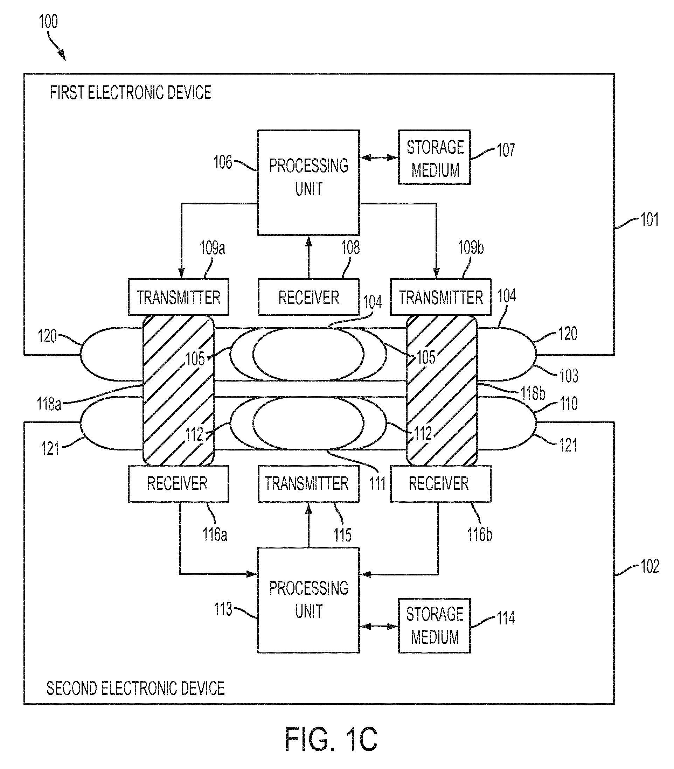

FIG. 1C illustrates the system 100 of FIG. 1 A when the first electronic device 101 transmits to the second electronic device 102. The first electronic device may encode data and transmit such as light 118a and 118b via the optical transmitters 109a and 109b. The outer portions 120 of the lens 103 may collect the light 118a and 118b transmitted by the optical transmitters 109a and 109b and pass the light 118a and 118b to the outer portions 121 of the lens 110. The outer portions 121 of the lens 110 may receive the passed light 118a and 118b and focus it onto the optical receivers 116a and 116b. The second electronic device may then decode the transmitted information from the light 118a and 118b received by the optical receivers 116a and 116b.

Returning to FIG. 1 A, the optical transmitters 109a, 109b, and/or 115 may be at least one light source. Such a light source may be any kind of light source such as a light emitting diode (LED), and organic light emitting diode (OLED), a laser a light transmitter, an incandescent light source, an infrared transmitter, and/or other such device capable of producing light. Similarly, the optical receivers 116a, 116b, and/or 108 may be a light detector. Such a light detector be any kind of light detector such as a photo diode, a light receiver, an infrared detector, and/or other such device capable of detecting light.

In some cases, one or more of the optical transmitters 109a, 109b, and/or 115 and/or the optical receivers 116a, 116b, and/or 108 may also be utilized for purposes other than data transmission. For example, one or more of the optical transmitters 116a, 116b, and/or 108 may also be utilized to provide one or more indicator lights to a user when not being used to transmit data. By way of another example, one or more of the optical receivers 116a, 116b, and/or 108 may be utilized as an ambient light detector to determine an ambient light level of an environment in which the respective electronic device is operating when not being used to receive data.

By way of still another example, one or more optical transmitters 109a, 109b, and/or 115 and/or the optical receivers 116a, 116b, and/or 108 may be utilized to determine whether or not the electronic devices 101 and 102 are docked and/or otherwise aligned. In such an example, one or more optical transmitters of the first device may periodically, continually, or otherwise transmit (such as in response to a signal from one or more alignment elements) and one or more receivers of the second device may periodically, continually, or otherwise (such as in response to a signal from one or more alignment elements) monitor for such a transmission. Upon receipt of such a transmission, the second device may determine that the devices are docked and/or otherwise aligned. At such time, the second device may transmit an acknowledgment that the devices are docked and/or otherwise aligned to the first device. Transmission may be initiated in a variety of manners, such as in response to a signal from one or more alignment elements of the device or devices such as one or more magnets, switches, detents, buttons, or other elements that detects that the devices are docked and/or otherwise aligned. These indications of alignment may trigger an instruction to begin transmission, for example. It should be appreciated that these are but a handful of examples of suitable structures that may be used to initiate a transmission.

By way of yet another example, one or more optical transmitters 109a, 109b, and/or 115 and/or optical receivers 116a, 116b, and/or 108 may be utilized to wake up and/or otherwise alter the power or other state of one or more components of the first and/or second electronic devices 101 and 102. For example, such a component may be a power transmission and/or charging system component. In such an example, one or more optical transmitters of such a first electronic device may periodically, continually, or otherwise transmit (such as in response to a signal from one or more alignment elements) and one or more receivers of the second device may periodically, continually, or otherwise (such as in response to a signal from one or more alignment elements) monitor for such a transmission. Upon receipt of such a transmission, the second device may wake up and/or otherwise alter the power state of a power transmission and/or charging system component of the first and/or second electronic device in order for power transmission and/or charging to be performed between the first and second electronic devices. Similar structures and/or conditions as those discussed above with respect to docking may be used initiate transmission, as may any other suitable structures and/or conditions.

The system 100 may enable simultaneous transmission and receiving of data optically between the first electronic device 101 and the second electronic device 102. This may enable faster communication than if the devices had to utilize the same optical path at different times in order to accomplish transmission and/or receipt without loss of data.

Although the system 100 is illustrated and described as having two optical paths (one being a single channel data path via light 117 illustrated in FIG. 1 B and the other being a split or dual channel data path via light 118a and 118b illustrated in FIG. 1 C), it is understood that this is an example. In various implementations, any number of different optical (transmit, receive, or both) paths which may be single, split, and/or otherwise configured. The present example is not intended to be limiting.

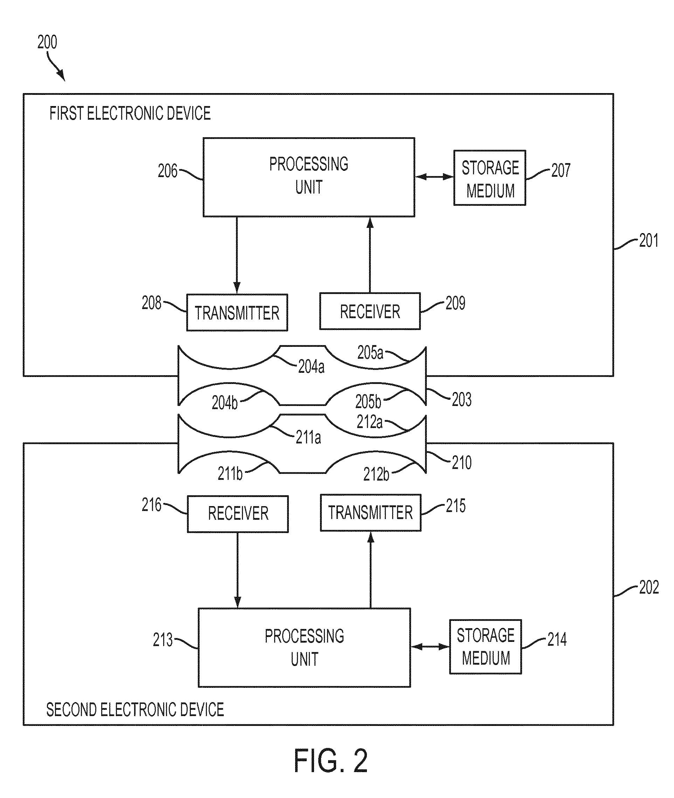

FIG. 2 is a block diagram illustrating an alternative example system 200 for optical data transmission utilizing lens isolation. As illustrated, a first electronic device 201 includes a processing unit 206, a non-transitory storage medium 207, an optical transmitter 208, and optical receiver 209, and a lens 203. Similarly, a second electronic device 202 includes a processing unit 213, a non-transitory storage medium 214, an optical transmitter 215, and optical receiver 216, and a lens 210.

Contrasted with the system 100 of FIG. 1 A, the lenses 203 and 210 of the system 200 of FIG. 2 may utilize lens geometry instead of (or in addition to) one or more different materials or separator elements to optically isolate first and second optical paths. As illustrated, the lens 203 includes pairs of concave portions 204a, 204b, 205a, and 205b. Similarly, the lens 210 includes pairs of concave portions 211 a, 211 b, 212a, and 212b. Such pairs of concave portions may function to prevent light transmitted from optical transmitter 208 to optical receiver 216 from propagating to interfere with light transmitted from optical transmitter 215 to optical receiver 209 and/or vice versa due to the geometry of the respective lens 203 or 210.

When light is transmitted by the transmitter 208 to the receiver 216, the concavity of the concave portion 204a may function to collect the light from the transmitter and focus the path of the light through the lens 203 to the concave portion 204b such that little or none of the light propagates through the lens 203 to interfere with light travelling between the transmitter 215 and the receiver 209. Light travelling from the concave portion 204b may be received and collected by the concave portion 211 a, the concavity of which may function to collect the light and focus the path of the light through the lens 210 to the concave portion 211 b such that little or none of the light propagates through the lens 210 to interfere with light travelling between the transmitter 215 and the receiver 209. As such, the path between the transmitter 208 and the receiver 216 is isolated.

Similarly, when light is transmitted by the transmitter 215 to the receiver 209, the concavity of the concave portion 212b may function to collect the light from the transmitter and focus the path of the light through the lens 210 to the concave portion 212a such that little or none of the light propagates through the lens 210 to interfere with light travelling between the transmitter 208 and the receiver 216. Light travelling from the concave portion 212a may be received and collected by the concave portion 205b, the concavity of which may function to collect the light and focus the path of the light through the lens 203 to the concave portion 205a such that little or none of the light propagates through the lens 203 to interfere with light travelling between the transmitter 208 and the receiver 216. As such, the path between the transmitter 215 and the receiver 209 is isolated.

Further, although the system 200 is illustrated and described as utilizing pairs of concave portions to optically isolate optical paths, it is understood that this is an example. In various implementations, other lens geometry may be utilized to optically isolate optical paths. For example, one or more convex portions may be utilized, combinations of convex and concave portions, and/or other lens geometry.

Additionally, in addition to and/or instead of lens geometry, angling and/or position of optical receivers and transmitters may be utilized to optically isolate optical paths. For example, the optical transmitters 208 and 215 and optical receivers 209 and 216 in the system 200 are illustrated as oriented at 90 degrees with respect to the respective lenses 203 and 210. However, in other implementations, transmitters for different optical paths may be oriented at 45 degree angles with respect to the corresponding lens at opposing directions from each other (and the corresponding optical receiver may be correspondingly arranged in order to receive the transmitted light). For example, in such a case the transmitter 208 may be angled at a 45 degree angle with respect to the lens 203 toward the left side of FIG 2 and the transmitter 215 may be angled at a 45 degree angle with respect to the lens 210 toward the right side of FIG 2 (and the receivers 216 and 209 angled accordingly to correspond). Such angling may reduce and/or eliminate light propagation from one optical path to the other.

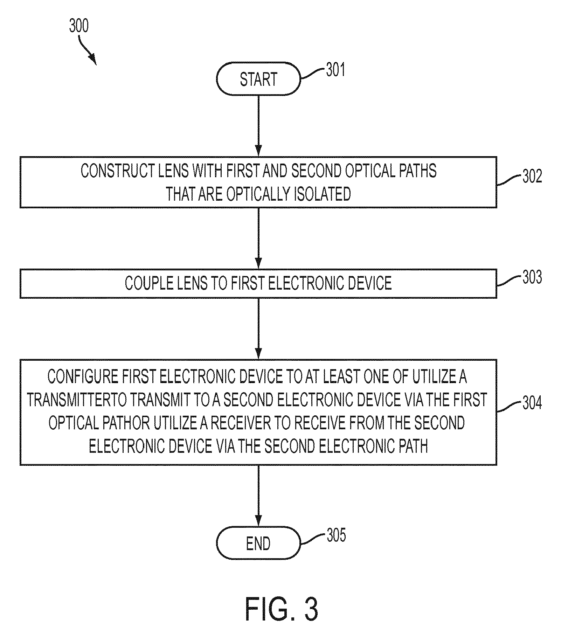

FIG. 3 is a flow chart illustrating a method 300 for optical data transmission utilizing lens isolation. This method may be performed by the systems of FIGS. 1A-1C or 2.

The flow begins at block 301 and proceeds to block 302 where a lens may be constructed with at least a first and second optical paths that are optically isolated from each other. The flow then proceeds to block 303 where the lens may be coupled to a first electronic device. The flow then proceeds to block 304.

At block 304, the first electronic device may be configured to at least one of utilize an optical transmitter to transmit to a second electronic device via the first optical path or utilize an optical receiver to receive from the second electronic device via the second optical path. In some cases, the first electronic device may be configured to do both.

The flow then proceeds to block 305 and ends.

Although the method 300 is illustrated and described above as including particular operations performed in a particular order, it is understood that this is an example. In various implementations, various arrangements of the same, similar, and/or different operations may be performed without departing from the scope of the present disclosure.

For example, the method 300 describes constructing a single lens and coupling it to a first electronic device. However, in various implementations the method may also include constructing an additional lens with at least a third and fourth optical paths that are optically isolated from each other and/or coupling such a lens to the second electronic device.

As described above and illustrated in the accompanying figures, the present disclosure discloses systems and methods for optical data transfer utilizing lens isolation. A first electronic device may optically communicate with a second electronic device. Each of the devices may include one or more optical transmitters, one or more optical receivers, and one or more lenses. Each of the lenses may include at least a first and a second optical path that are optically isolated from each other. When the first electronic device transmits data to the second electronic device, an optical transmitter of the first electronic device may transmit to an optical receiver of the second electronic device via the first optical paths of the lenses of the first and second electronic devices. Similarly, when the first electronic device receives data from the second electronic device, an optical receiver of the first electronic device may receive an optical receiver of the second electronic device via the second optical paths of the lenses of the first and second electronic devices. As the communication is performed optically through lenses that may be resistant and/or immune to corrosion, the devices may suffer fewer problems caused by exposure to the environment, body chemicals, and/or other such substances. As transmission and receipt are isolated, they may be performed simultaneously and this increase data throughput over systems that either receive or transmit at a single time.

In the present disclosure, the methods disclosed may be implemented as sets of instructions or software readable by a device. Further, it is understood that the specific order or hierarchy of steps in the methods disclosed are examples of sample approaches. In other embodiments, the specific order or hierarchy of steps in the method can be rearranged while remaining within the disclosed subject matter. The accompanying method claims present elements of the various steps in a sample order, and are not necessarily meant to be limited to the specific order or hierarchy presented.

The described disclosure may be provided as a computer program product, or software, that may include a non-transitory machine-readable medium having stored thereon instructions, which may be used to program a computer system (or other electronic devices) to perform a process according to the present disclosure. A non-transitory machine-readable medium includes any mechanism for storing information in a form (e.g., software, processing application) readable by a machine (e.g., a computer). The non-transitory machine-readable medium may take the form of, but is not limited to, a magnetic storage medium (e.g., floppy diskette, video cassette, and so on); optical storage medium (e.g., CD-ROM); magneto-optical storage medium; read only memory (ROM); random access memory (RAM); erasable programmable memory (e.g., EPROM and EEPROM); flash memory; and so on.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes.

While the present disclosure has been described with reference to various embodiments, it will be understood that these embodiments are illustrative and that the scope of the disclosure is not limited to them. Many variations, modifications, additions, and improvements are possible. More generally, embodiments in accordance with the present disclosure have been described in the context or particular embodiments. Functionality may be separated or combined in blocks differently in various embodiments of the disclosure or described with different terminology. These and other variations, modifications, additions, and improvements may fall within the scope of the disclosure as defined in the claims that follow.

## Claims

1. A system for optical data transfer, comprising:
a first electronic device (101), comprising:
at least one first device optical transmitter (109a);
at least one first device optical receiver (108); and
at least one first device lens (103) including at least a first optical path and a second optical path; and
wherein the at least one first device optical transmitter (109a) transmits utilizing at least the first optical path and the at least one first device optical receiver (108) receives utilizing at least the second optical path;
**characterized in that**:
the first optical path is optically isolated from the second optical data path.

2. The system of claim 1, further comprising a second electronic device (102) that includes at least one second device lens (110) wherein the at least one second device lens (110) includes at least a third optical path and a fourth optical path, the third optical path is optically isolated from the fourth optical data path.

3. The system of claim 2, wherein the second electronic device further comprises at least one second device optical transmitter (115) and at least one second device optical receiver (116a) wherein the at least one second device optical transmitter (115) transmits utilizing at least the fourth optical path and the at least one second device optical receiver (116a) receives utilizing at least the third optical path.

4. The system of claim 3, wherein the fourth optical path transmits from the at least one second device lens (110) to the second optical path of the at least one first device lens (103) and the first path transmits from the at least one first device lens (103) to the third optical path of the at least one second device lens (110).

5. The system of any preceding claim, wherein the at least one first device optical transmitter (109a) comprises at least one light source.

6. The system of claim 5, wherein the at least one light source comprises at least one light emitting diode, organic light emitting diode, laser, light transmitter, or infrared transmitter.

7. The system of any preceding claim, wherein the at least one first device optical receiver (108) comprises at least one light detector.

8. The system of claim 7, wherein the at least one light detector comprises at least one photo diode, light receiver, or infrared detector.

9. The system of any preceding claim, wherein the first optical path corresponds to a first portion of the at least one first device lens (103) comprising at least a first material and the second optical path corresponds to a second portion of the at least one first device lens (103) comprising at least a second material.

10. The system of claim 9, wherein the first material comprises zirconium and the second material comprises sapphire.

11. The system of claim 10, wherein the zirconium is coupled to the sapphire utilizing adhesive.

12. The system of claim 10 or claim 11, where in the zirconium is opaque zirconium.

13. The system of any preceding claim, wherein the first optical path corresponds to a first portion of the at least one first device lens, the second optical path corresponds to a second portion of the at least one first device lens, and the first portion is separated from the second portion by at least one separator element (105).

14. The system of claim 13, wherein the separator element (105) comprises at least one of a brazing ring, silicon, metal, or adhesive.

15. The system of any preceding claim, wherein the first electronic device (101) utilizes the at least one first device optical transmitter (109a) to transmit data to a or the second electronic device (102) and the at least one first device optical receiver (108) to receive data from the second electronic device (102).

16. The system of claim 15, wherein at least one of the first electronic device (101) utilizes the at least one of the first device optical transmitter (109a) for at least one purpose other than data transmission or the first electronic device (101) utilizes the first device optical receiver (108) for at least one other purpose than data receiving.

17. The system of any preceding claim, wherein the first optical path is optically isolated from the second optical data path by at least one of geometry of the at least one first device lens (103) or angling of the at least one optical transmitter (109a).

18. The system of any preceding claim, wherein the at least one first device lens (103) focuses light from the second optical path onto the at least one first device optical receiver (108).

19. An electronic device (101), comprising:
at least one optical transmitter (109a);
at least one optical receiver (108); and
at least one lens (103) including at least a first optical path and a second optical path;
wherein the at least one optical transmitter (109a) transmits to an additional electronic device (102) utilizing at least the first optical path and the at least one optical receiver (108) receives from the additional electronic device (102) utilizing at least the second optical path;
**characterized in that**:
the first optical path is optically isolated from the second optical data path.

20. A method for optical data transfer using lens isolation, the method comprising:
constructing at least one lens with a first optical path and a second optical path ;
coupling the at least one lens to a first electronic device; and
configuring the first electronic device to at least one of:
utilize at least one optical transmitter to transmit to a second electronic device via the first optical path; or
utilize at least one optical receiver to receive from the second electronic device via the second optical path;
**characterized in that**:
the first optical path is optically isolated from the second optical path.

## Patentansprüche

1. System zur optischen Datenübertragung, umfassend:
eine erste elektronische Vorrichtung (101), umfassend:
zumindest eine erste optische Sendevorrichtung (109a);
zumindest eine erste optische Empfangsvorrichtung (108); und
zumindest eine erste Linsenvorrichtung (103), die zumindest einen ersten optischen Pfad und einen zweiten optischen Pfad beinhaltet; und
wobei die zumindest eine erste optische Sendevorrichtung (109a) überträgt, unter Nutzung von zumindest dem ersten optischen Pfad, und die zumindest eine erste optische Empfangsvorrichtung (108) empfängt, unter Verwendung von zumindest dem zweiten optischen Pfad;
**dadurch gekennzeichnet, dass**:
der erste optische Pfad optisch von dem zweiten optischen Datenpfad isoliert ist.

2. System nach Anspruch 1 ferner umfassend eine zweite elektronische Vorrichtung (102), die zumindest eine zweite Linsenvorrichtung (110) beinhaltet, wobei die zumindest eine zweite Linsenvorrichtung (110) zumindest einen dritten optischen Pfad und einen vierten optischen Pfad beinhaltet, wobei der dritte optische Pfad optisch von dem vierten optischen Datenpfad isoliert ist.

3. System nach Anspruch 2, wobei die zweite elektronische Vorrichtung ferner zumindest eine zweite optische Sendevorrichtung (115) und zumindest eine zweite optische Empfangsvorrichtung (116a) umfasst, wobei die zumindest eine zweite optische Sendevorrichtung (115) unter Verwendung von zumindest dem vierten optischen Pfad übermittelt und die zumindest eine zweite optische Empfangsvorrichtung (116a) unter Verwendung von zumindest dem dritten optischen Pfad empfängt.

4. System nach Anspruch 3, wobei der vierte optische Pfad von der zumindest einen zweiten Linsenvorrichtung (110) zu dem zweiten optischen Pfad der zumindest einen ersten Linsenvorrichtung (103) überträgt und der erste Pfad von der zumindest einen ersten Linsenvorrichtung (103) zu dem dritten optischen Pfad der zumindest einen zweiten Linsenvorrichtung (110) überträgt.

5. System nach irgendeinem der vorhergehenden Ansprüche, wobei die zumindest eine erste optische Sendevorrichtung (109a) zumindest eine Lichtquelle umfasst.

6. System nach Anspruch 5, wobei die zumindest eine Lichtquelle zumindest eine Leuchtdiode, eine organische Leuchtdiode, einen Laser, einen Lichtsender oder einen Infrarotsender umfasst.

7. System nach einem der vorhergehenden Ansprüche, wobei die zumindest eine erste optische Empfangsvorrichtung (108) zumindest einen Lichtdetektor umfasst.

8. System nach Anspruch 7, wobei der zumindest eine Lichtdetektor zumindest eine Fotodiode, einen Lichtempfänger oder einen Infrarotdetektor umfasst.

9. System nach einem der vorhergehenden Ansprüche, wobei der erste optische Pfad einem ersten Teil der zumindest einen ersten Linsenvorrichtung (103) entspricht, welcher zumindest ein erstes Material umfasst, und der zweite optische Pfad einem zweiten Teil der zumindest einen ersten Linsenvorrichtung (103) entspricht, welcher zumindest ein zweites Material umfasst.

10. System nach Anspruch 9, wobei das erste Material Zirkonium umfasst und das zweite Material Saphir umfasst.

11. System nach Anspruch 10, wobei das Zirkonium unter Verwendung von Klebstoff mit dem Saphir gekoppelt ist.

12. System nach Anspruch 10 oder 11, wobei das Zirkonium lichtundurchlässiges Zirkonium ist.

13. System nach einem der vorhergehenden Ansprüche, wobei der erste optische Pfad einem ersten Teil der zumindest einen ersten Linsenvorrichtung entspricht, der zweite optische Pfad einem zweiten Teil der zumindest einen ersten Linsenvorrichtung entspricht und der erste Teil von dem zweiten Teil durch zumindest ein Trennelement (105) getrennt ist.

14. System nach Anspruch 13, wobei das Trennelement (105) zumindest einen aus einem Lötring, Silikon, Metall oder Klebstoff umfasst.

15. System nach einem der vorhergehenden Ansprüche, wobei die erste elektronische Vorrichtung (101) die zumindest eine erste optische Sendevorrichtung (109a) verwendet, um Daten zu einer oder der zweiten elektronischen Vorrichtung (102) zu übertragen und die zumindest eine erste optische Empfangsvorrichtung (108) verwendet, um Daten von der zweiten elektronischen Vorrichtung (102) zu empfangen.

16. System nach Anspruch 15, wobei zumindest eine der ersten elektronischen Vorrichtungen (101) die zumindest eine der ersten optischen Sendevorrichtungen (109a) für zumindest einen anderen Zweck als Datenübertragung verwendet oder die erste elektronische Vorrichtung (101) den ersten optischen Empfänger (108) für zumindest einen anderen Zweck als Datenempfang verwendet.

17. System nach einem der vorhergehenden Ansprüche, wobei der erste optische Pfad optisch von dem zweiten optischen Datenpfad isoliert ist, durch entweder Geometrie von der zumindest einen ersten Linsenvorrichtung (103) oder das Winkeleinstellen von dem zumindest einen optischen Sender (109a).

18. System nach einem der vorhergehenden Ansprüche, wobei die zumindest eine erste Linsenvorrichtung (103) Licht von dem zweiten optischen Pfad auf die zumindest eine erste optische Empfangsvorrichtung (108) fokussiert.

19. Elektronisches Vorrichtung (101) umfassend:
zumindest einen optischen Sender (109a);
zumindest einen optischen Empfänger (108); und
zumindest eine Linse (103), die zumindest einen ersten optischen Pfad und
einen zweiten optischen Pfad beinhaltet;
wobei der zumindest eine optische Sender (109a) an eine zusätzliche elektronische Vorrichtung (102) übermittelt unter Verwendung von zumindest dem ersten optischen Pfad und wobei der zumindest eine optische Empfänger (108) von der zusätzlichen elektronischen Vorrichtung (102) empfängt unter Verwendung von zumindest dem zweiten optischen Pfad;
**dadurch gekennzeichnet, dass**:
der erste optische Pfad optisch von dem zweiten optischen Datenpfad isoliert ist.

20. Verfahren für optische Datenübertragung unter Verwendung von Linsenisolation, wobei das Verfahren umfasst:
Konstruieren von zumindest einer Linse mit einem ersten optischen Pfad und einem zweiten optischen Pfad;
Koppeln der zumindest einen Linse an eine erste elektronische Vorrichtung; und
Ausgestalten der ersten elektronischen Vorrichtung zu zumindest einem von:
Verwenden von zumindest einem optischen Sender, um an eine zweite elektronische Vorrichtung über den ersten optischen Pfad zu übertragen; oder
Verwenden von zumindest einem optischen Empfänger, um von der zweiten elektronischen Vorrichtung über den zweiten optischen Pfad zu empfangen;
**dadurch gekennzeichnet, dass**:
der erste optische Pfad optisch von dem zweiten optischen Pfad isoliert ist.

## Revendications

1. Système de transfert de données optiques, comprenant :
un premier dispositif électronique (101), comprenant :
au moins un premier émetteur optique de dispositif (109a) ; au moins un premier récepteur optique de dispositif (108) ; et
au moins une première lentille de dispositif (103) comportant au moins un premier chemin optique et un deuxième chemin optique ; et
dans lequel l'au moins un premier émetteur optique de dispositif (109a) émet en utilisant au moins le premier chemin optique, et l'au moins un premier récepteur optique de dispositif (108) reçoit en utilisant au moins le deuxième chemin optique ;
**caractérisé en ce que** :
le premier chemin optique est isolé optiquement du deuxième chemin de données optiques.

2. Système selon la revendication 1, comprenant en outre un second dispositif électronique (102) qui comporte au moins une seconde lentille de dispositif (110) dans lequel l'au moins une seconde lentille de dispositif (110) comporte au moins un troisième chemin optique et un quatrième chemin optique, le troisième chemin optique étant isolé optiquement du quatrième chemin de données optiques.

3. Système selon la revendication 2, dans lequel le second dispositif électronique comprend en outre au moins un second émetteur optique de dispositif (115) et au moins un second récepteur optique de dispositif (116a) dans lequel l'au moins un second émetteur optique de dispositif (115) émet en utilisant au moins le quatrième chemin optique, et l'au moins un second récepteur optique de dispositif (116a) reçoit en utilisant au moins le troisième chemin optique.

4. Système selon la revendication 3, dans lequel le quatrième chemin optique émet depuis l'au moins une seconde lentille de dispositif (110) vers le second chemin optique de l'au moins une première lentille de dispositif (103), et le premier chemin émet depuis l'au moins une première lentille de dispositif (103) vers le troisième chemin optique de l'au moins une seconde lentille de dispositif (110).

5. Système selon une quelconque revendication précédente, dans lequel l'au moins un premier émetteur optique de dispositif (109a) comprend au moins une source de lumière.

6. Système selon la revendication 5, dans lequel l'au moins une source de lumière comprend au moins une diode électroluminescente, une diode électroluminescente organique, un laser, un émetteur de lumière, ou un émetteur infrarouge.

7. Système selon une quelconque revendication précédente, dans lequel l'au moins un premier récepteur optique de dispositif (108) comprend au moins un détecteur de lumière.

8. Système selon la revendication 7, dans lequel l'au moins un détecteur de lumière comprend au moins une photodiode, un récepteur de lumière ou un détecteur infrarouge.

9. Système selon une quelconque revendication précédente, dans lequel le premier chemin optique correspond à une première portion de l'au moins une première lentille de dispositif (103) comprenant au moins un premier matériau, et le deuxième chemin optique correspond à une seconde portion de l'au moins une première lentille de dispositif (103) comprenant au moins un second matériau.

10. Système selon la revendication 9, dans lequel le premier matériau comprend du zirconium et le second matériau comprend du saphir.

11. Système selon la revendication 10, dans lequel le zirconium est couplé avec le saphir en utilisant de l'adhésif.

12. Système selon la revendication 10 ou la revendication 11, dans lequel le zirconium est du zirconium opaque.

13. Système selon une quelconque revendication précédente, dans lequel le premier chemin optique correspond à une première portion de l'au moins une première lentille de dispositif, le deuxième chemin optique correspond à une seconde portion de l'au moins une première lentille de dispositif, et la première portion est séparée de la seconde portion par au moins un élément séparateur (105).

14. Système selon la revendication 13, dans lequel l'élément séparateur (105) comprend au moins l'un d'entre un anneau de brasage, du silicium, du métal ou un adhésif.

15. Système selon une quelconque revendication précédente, dans lequel le premier dispositif électronique (101) utilise l'au moins un premier émetteur optique de dispositif (109a) pour transmettre des données à un ou au second dispositif électronique (102), et l'au moins un premier récepteur optique de dispositif (108) pour recevoir des données du second dispositif électronique (102).

16. Système selon la revendication 15, dans lequel au moins l'un du premier dispositif électronique (101) utilise l'au moins un du premier émetteur optique de dispositif (109a) à au moins une fin autre que la transmission de données, ou le premier dispositif électronique (101) utilise le premier récepteur optique de dispositif (108) à au moins une autre fin que la réception de données.

17. Système selon une quelconque revendication précédente, dans lequel le premier chemin optique est isolé optiquement du deuxième chemin de données optiques par au moins l'un de la géométrie de l'au moins une première lentille de dispositif (103) ou l'angle de l'au moins un premier émetteur optique (109a).

18. Système selon une quelconque revendication précédente, dans lequel l'au moins une première lentille de dispositif (103) concentre la lumière provenant du deuxième chemin optique sur l'au moins un premier récepteur optique de dispositif (108).

19. Dispositif électronique (101), comprenant :
au moins un émetteur optique (109a) ;
au moins un récepteur optique (108) ; et
au moins une lentille (103) comprenant au moins un premier chemin optique et un deuxième chemin optique ; et
dans lequel l'au moins un émetteur optique (109a) transmet à un dispositif électronique supplémentaire (102) en utilisant au moins le premier chemin optique, et l'au moins un récepteur optique (108) reçoit du dispositif électronique supplémentaire (102) en utilisant au moins le deuxième chemin optique ;
**caractérisé en ce que** :
le premier chemin optique est isolé optiquement du deuxième chemin de données optiques.

20. Procédé de transfert de données optiques utilisant l'isolation de lentille, le procédé comprenant :
la construction d'au moins une lentille avec un premier chemin optique et un deuxième chemin optique ;
le couplage de l'au moins une lentille avec un premier dispositif électronique ; et
la configuration du premier dispositif électronique pour au moins l'un de :
utiliser au moins un émetteur optique pour transmettre à un second dispositif électronique via le premier chemin optique ; ou
utiliser au moins un récepteur optique pour recevoir du second dispositif électronique via le deuxième chemin optique ;
**caractérisé en ce que** :
le premier chemin optique est isolé optiquement du deuxième chemin optique.
